# EUROPEAN PATENT APPLICATION

(11) **EP 4 813 871 A1**
(43) Date of publication of application: **30.09.2026**
(21) Application number: 25165543.7
(22) Date of filing: 24.03.2025
(51) Int. Cl.: B65G 1/04

(54) **METHOD FOR REMOVING A PALLET FROM A PALLET RACK, AS WELL AS PALLET RACK FOR USE IN THE METHOD**

(71) Applicant: Overbeek, Jan Willem Josef, 7495 SP Ambt Delden (NL)
(72) Inventor: Overbeek, Jan Willem Josef, 7495 SP Ambt Delden (NL)
(74) Representative: Verhees, Godefridus Josephus Maria

(57) **Abstract**

When removing a pallet 11 from a pallet rack 1 in the usual manner, it is first lifted in its entirety and then removed from the pallet rack 1. The entire weight of the loaded pallet 11 then acts on the centre of gravity. A torque FxA1 is then exerted on the narrow-aisle truck. By first lifting the pallet at the front, the weight of the pallet is absorbed at two points, namely by the rear wheels 17 and by the tow bar 27. The force on the wheels 17 is carried by the rail 7 and the force F/2 on the tow bar 27 now acts on a much shorter arm A2. As a result, the torque on the narrow-aisle truck is only F/2xA2 and this is only a fraction of the torque FxA1. This allows a narrow aisle truck to remove heavily loaded pallets from the pallet rack without the risk of tipping.

## Description

### Technical field of the invention

The invention relates to a method for removing a pallet from a pallet rack, which pallet rack comprises:
- a frame comprising a number of columns next to each other and rows of compartments above each other, whereby each compartment is provided with two parallel rails which extend perpendicularly to the front of the pallet rack, from the front to the rear, and are each present on a side of the compartment, as well as
- pallets which are present in the compartments and rest on the rails with their side edges, whereby the pallets are present with their front near the front of the pallet rack.

### Background of the invention

A pallet rack as described in the preamble of claim 5 is generally known. If there is a heavy load on the pallet and the pallet is lifted from the rails in the pallet rack using a narrow-aisle truck in order to remove it from the pallet rack, the pallet will exert a torque on the narrow-aisle truck. The load on the pallet must not be too heavy, otherwise the narrow-aisle truck will tip over.

### Summary of the invention

An object of the invention is to provide a method for removing a pallet from a pallet rack in which the permissible load of the pallet is higher than with the known pallet rack and the chance of the truck tipping over is much smaller. To this end, the method according to the invention is characterised in that the pallet to be removed is grabbed at the front, then the pallet is lifted slightly at the front so that the pallet only rests on the rails near the rear end, and then the pallet is pulled out of the compartment in which it is located. Because the pallet is not lifted in its entirety but remains resting on the rails with the rear end, the force to lift the front is only half the weight of the pallet. Furthermore, the arm on which this force acts is considerably shorter, so that the torque acting on the truck is much lower, which means that there is hardly any chance of the truck tipping over.

An embodiment of the method according to the invention is characterised in that the pallets are provided with wheels near the rear that can be moved over the rails, whereby after lifting the pallet at the front, the pallet is driven out of the compartment over the rails. This makes it even easier to remove a pallet from the pallet rack.

The wheels are preferably located behind the rear of the pallets and the underside of the tread of the wheels are at the same height as or above the underside of the pallets, so that only after lifting the pallet at the front, the pallet can be driven out of the compartment over the rails. The pallet is preferably pulled onto a narrow-aisle truck.

The invention also relates to a pallet rack for use in a narrow-aisle warehouse, comprising:
- a frame comprising a number of columns next to each other and rows of compartments above each other, whereby each compartment is provided with two parallel rails that extend perpendicular to the front of the pallet rack, from the front to the rear, and are each present on a side of the compartment, and
- pallets that are present in the compartments and rest on the rails with their side edges, whereby the pallets are present with their front near the front of the pallet rack,
whereby the pallets can be removed from the pallet rack with a narrow-aisle truck at the front of the pallet rack.

With regard to the pallet rack, the invention is characterised in that the pallets are provided with coupling means at the front with which the pallets can be pulled out of the compartments by sliding over the rails. The coupling means are preferably provided with a towing eye.

Preferably, the pallets are provided with wheels at the rear that can be moved over the rails. These wheels are preferably located behind the rear of the pallets and preferably have the underside of the tread at the same height as or above the underside of the pallets, so that the wheels only ride over the rails when the front is lifted.

### Brief description of the drawings

The invention will be explained in more detail below using an exemplary embodiment of the pallet rack and method according to the invention shown in the drawings. In the drawing:
Figure 1 shows an embodiment of the pallet rack in front view with a narrow-aisle truck next to the pallet rack;
Figure 2 shows the pallet rack shown in figure 1 with the narrow-aisle truck in front of the pallet rack;
Figure 3 shows the pallet rack with the narrow-aisle truck in side view while removing a pallet from the pallet rack;
Figure 4 shows the pallet rack with narrow-aisle truck shown in figure 3 with removed pallet;
Figure 5 shows a detail of figure 3 enlarged; and
Figure 6 shows a detail of figure 4 enlarged.

### Detailed description of the drawings

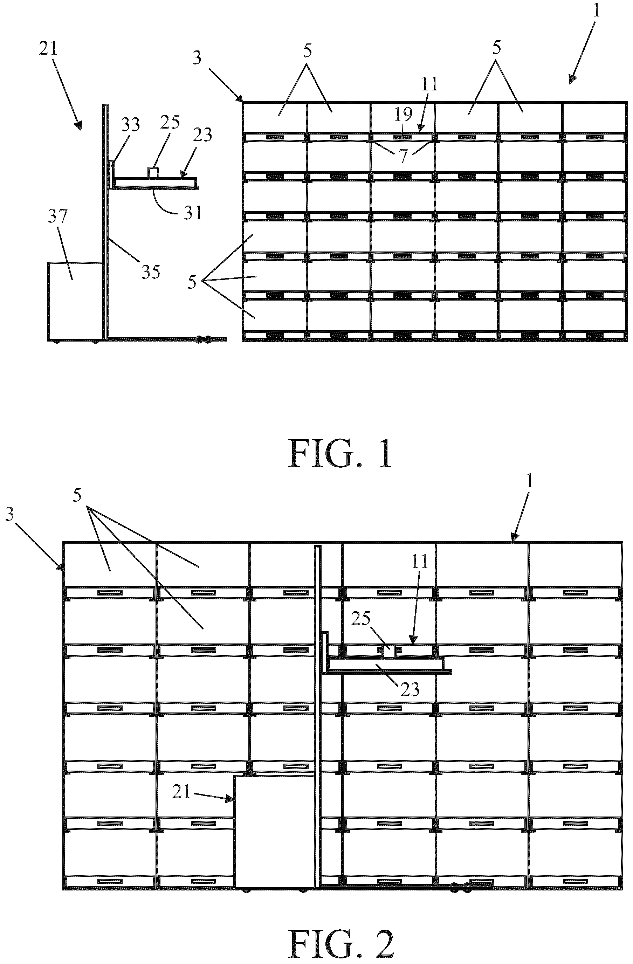

Figures 1 and 2 show an embodiment of the pallet rack according to the invention in front view. The pallet rack 1 has a frame 3 that forms a number of compartments 5 that are present in columns next to each other and in rows below and above each other. Each of these compartments 5 is provided with two parallel rails 7 that extend perpendicularly to the front 9 of the pallet rack 1 to the rear and are each present on a side of the compartment 5. In this embodiment, the rails are formed by corner profiles.

Each compartment 5 contains a pallet 11 that rests with its side edges on the rails 7. The pallets 11 are located with the front 13 near the front 9 of the pallet rack 1.

With a narrow-aisle truck 21, the pallets 11 can be removed from the pallet rack 1 at the front 9 of the pallet rack. For this purpose, the pallets 11 are provided with coupling means formed by a towing eye 19 at the front 13 and the narrow-aisle truck 21 is provided with a towing device 23. This towing device 23 has a towing carriage 25 that is provided with a towing hook 27. The towing carriage 25 can be moved along a guide 29. To move the towing carriage 25, the towing device 23 is provided with moving means (not visible in the figures).

The narrow-aisle truck 21 also has two spoons 31 that are attached to a lifting carriage 33 that can be moved in a vertical direction along a vertical guide 35. The pulling device 23 is fixed to the spoons 31 in such a way that the pulling carriage 25 can be moved in a direction transverse to the longitudinal direction of the spoons 31. The narrow-aisle truck 21 is provided with a drive 37 and can be driven in front of the pallet rack 1, see figure 2.

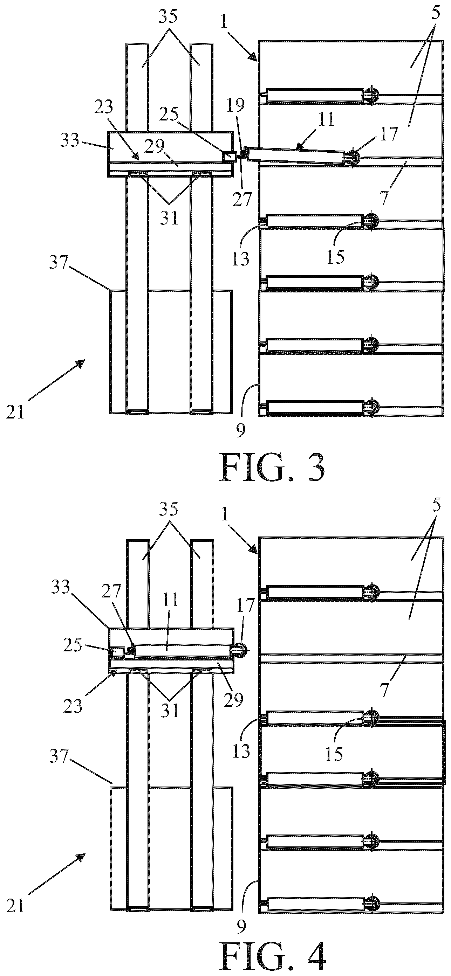

In order to facilitate pulling the pallets 11 out of the pallet rack 1, the pallets 11 are provided at the rear 15 with wheels 17 that can be moved over the rails 7. This is visible in figures 3 and 4 where the pallet rack 1 is shown in side view. These wheels 17 are located behind the rear 15 of the pallets 11 and are present with the underside of the tread at the same height as or above the underside of the pallets 11, so that the wheels 17 only move over the rails 7 if the front 13 is lifted. Figure 3 shows the situation when a pallet 11 is pulled out of the pallet rack 1 and figure 4 shows the situation in which the pallet 11 is above the forks 31 of the narrow-aisle truck 21.

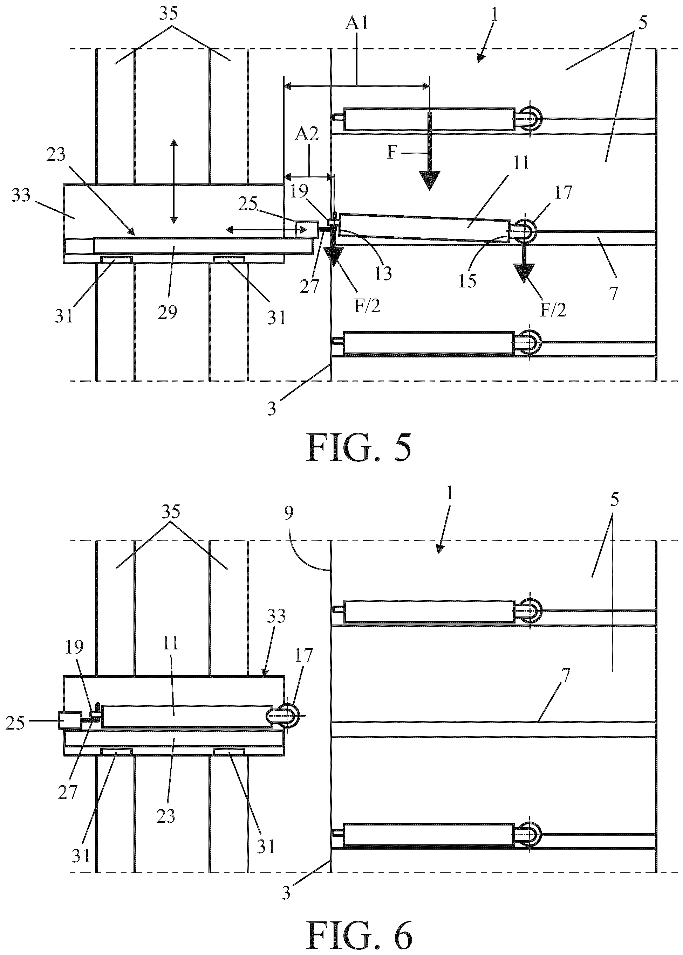

Figures 5 and 6 show an enlarged view of the pulling of a pallet 11 out of the pallet rack 1. When a pallet 11 is removed from the pallet rack 1 in the usual manner, it is first lifted in its entirety and then removed from the pallet rack 1. The entire weight of the pallet 11 with the products on it then acts on the centre of gravity. A torque F x A1 is then exerted on the narrow-aisle truck, see figure 5. By first lifting the pallet 11 at the front, the weight of the pallet 11 is absorbed at two places, namely by the rear wheel 17 and by the tow hook 27. The force on the wheels 17 is carried by the rail 7 and the force F/2 on the tow hook 27 now acts on a much shorter arm A2. As a result, the torque on the narrow-aisle truck is only F/2 x A2 and this is only a fraction of the torque F x A1. As a result, heavily loaded pallets 11 can be removed from the pallet rack 1 with a narrow-aisle truck without the risk of the narrow-aisle truck tipping over.

Although the invention has been explained above with reference to the drawings, it should be noted that the invention is by no means limited to the embodiments shown in the drawings. The invention also extends to all embodiments deviating from the embodiments shown in the drawings within the framework defined by the claims.

## Claims

1. Method for removing a pallet (11) from a pallet rack (1), which pallet rack (1) comprises:
- a frame (3) comprising a number of columns next to each other and rows of compartments (5) above each other, whereby each compartment (5) is provided with two parallel rails (7) which extend perpendicularly to the front (9) of the pallet rack (1), from the front to the rear, and are each present on a side of the compartment (5), as well as
- pallets (11) which are present in the compartments (5) and rest on the rails (7) with their side edges, whereby the pallets (11) are present with their front (13) near the front (9) of the pallet rack (1),
**characterized in that** the pallet (11) to be removed is gripped at the front (13), then the pallet (11) is lifted slightly at the front (13) so that the pallet (11) only rests near the rear (15) on the rails (7) and then the pallet (11) is pulled out of the compartment (5) in which it is located.

2. Method according to claim 1, **characterised in that** the pallets (11) are provided with wheels (17) near the rear (15) which can be moved on the rails (7) and after lifting the pallet (11) at the front, the pallet (11) is moved out of the compartment (5) on the rails (7).

3. Method according to claim 2, **characterised in that** the wheels (17) are located behind the rear (15) of the pallets (11) and the underside of the tread of the wheels (17) are at the same height as or above the underside of the pallets (11), and after lifting the pallet (11) at the front (13), the pallet (11) is moved out of the compartment (5) on the rails (7).

4. Method according to claim 1, 2 or 3, **characterised in that** the pallet (11) is pulled onto a narrow-aisle truck (21).

5. Pallet rack (1) for use in a narrow-aisle warehouse, comprising:
- a frame (3) comprising a number of columns next to each other and rows of compartments (5) above each other, each compartment (5) being provided with two parallel rails (7) extending at right angles to the front (9) of the pallet rack (1), from the front to the rear and each being present on a side of the compartment (5), and
- pallets (11) present in the compartments and resting with their side edges on the rails (7), the pallets (11) being present with their front (13) near the front (9) of the pallet rack (1),
whereby the pallets (11) can be removed from the pallet rack (1) with a narrow-aisle truck (21) at the front (9) of the pallet rack (1),
**characterised in that** the pallets (11) are provided at the front (13) with coupling means with which the pallets (11) can be pulled out of the compartments (5) by sliding over the rails (7).

6. Pallet rack according to claim 5, **characterised in that** the coupling means are provided with a towing eye (19).

7. Pallet rack according to claim 5 or 6, **characterised in that** the pallets (11) are provided with wheels (17) at the rear (15) that can be moved over the rails (7).

8. Pallet rack according to claim 7, **characterised in that** the wheels (17) are located behind the rear (15) of the pallets (11) and the underside of the tread of the wheels (17) are at the same height as or above the underside of the pallets (11), so that the wheels (17) only move over the rails (7) when the front (13) is lifted.
